# FASCICULE DE BREVET EUROPEEN

(11) **EP 2 255 954 B1**
(45) Date de publication et mention de la délivrance du brevet: **17.09.2014**
(21) Numéro de dépôt: 10163608.2
(22) Date de dépôt: 21.05.2010
(51) Int. Cl.: B29C 65/54, B29C 65/58, B29C 65/72, F16L 13/11, F16L 47/02, B29L 23/00, F16L 47/24, H01H 9/10, H01H 85/20

(54) **Procédé d'assemblage de jonction entre deux tubes dont au moins un en matière thermoplastique moulée, application à la réalisation d'un dispositif porte-fusible haute ou moyenne tension**
Verfahren zum Zusammenbau einer Verbindung zwischen zwei Rohren, von den mindestens eines ein thermoplastisches Formteil ist, sowie Anwendung zur Herstellung einer Sicherungshaltevorrichtung für Hoch- oder Mittelspannung
Method for assembling the connection between two tubes, at least one of which is made of a moulded thermoplastic material, implementation for the production of a high- or medium-voltage fuse-holder device

(30) Priorité: 27.05.2009 FR 0953484
(43) Date de publication de la demande: 01.12.2010
(73) Titulaire: Schneider Electric Energy France, 92500 Rueil-Malmaison (FR)
(72) Inventeur: Chambaz, Patrick, 71570 Romaneche Thorins (FR)
(74) Mandataire: Ilgart, Jean-Christophe

(56) Documents cités:
- EP-A2- 0 253 347
- GB-A- 695 027
- GB-A- 903 936
- GB-A- 963 910
- GB-A- 966 772
- GB-A- 1 279 689
- GB-A- 1 311 318
- US-A- 3 784 235
- US-A- 3 909 045
- US-A- 4 081 778
- US-A- 4 562 322
- US-A- 4 746 381
- US-A- 5 655 292
- US-A1- 2009 090 454

## Description

### DOMAINE TECHNIQUE

L'invention concerne le domaine de l'assemblage de jonction entre deux tubes dont au moins un en matière thermoplastique moulée.

L'invention permet ainsi d'assurer une liaison mécanique étanche entre un tube thermoplastique moulé et un raccord métallique ou entre deux tubes thermoplastiques moulés. L'étanchéité de liaison obtenue est assurée quel que soit l'environnement intérieur ou extérieur auquel est soumis l'assemblage formé par les tubes (air, gaz, liquide ou pâteuse ou un mixte des trois).

Une application particulièrement visée par l'invention est la réalisation de dispositifs porte fusible, tels que des puits fusibles pour appareillage électrique haute ou moyenne tension, par exemple présents dans les postes de distribution d'énergie électrique moyenne ou haute tension à isolation gazeuse, tel que dans le SF6.

Une autre application intéressante est la réalisation d'isolateurs pour ligne moyenne ou haute tension.

Une autre application intéressante est la réalisation de la traversée de raccordement à une ligne haute ou moyenne tension dans un appareillage de commutation électrique.

Il va de soi que toute autre application industrielle peut être concernée dans la mesure où elle nécessite un assemblage mécanique étanche entre deux tubes dont au moins un en matière thermoplastique moulée.

### ART ANTÉRIEUR

Dans le domaine de l'appareillage haute ou moyenne tension, il est connu d'utiliser des fusibles qui permettent de protéger électriquement les appareillages situés en aval d'un poste de distribution électrique.

Chaque fonction fusible comprend usuellement un dispositif porte fusible, appelé puits fusible.

De par la fonction première qu'il réalise, un tel puits fusible comprend un tube en matière isolante électriquement et assemblé avec des parties métalliques conductrices qui assure, une fois en configuration de fonctionnement, la connexion électrique avec le fusible.

A ce jour, il existe essentiellement deux technologies pour réaliser les tubes puits fusible : la première consiste en un moulage en résine époxy, la deuxième consiste en une fabrication à partir d'un tube réalisé en enroulement filamentaire.

En ce qui concerne la première technologie, le corps isolant du puits fusible est réalisé par moulage avec une résine Epoxy chargé en silice. Les prises de courant permettant l'interface électrique du fusible sont soit surmoulées (inserts) soit rapportées (par montage avec des joints d'étanchéité). Les inconvénients de cette première technologie sont nombreux.

Ces interfaces traversantes assurant le passage du courant doivent normalement être parfaitement étanches au gaz SF6 et ceci, mêmes soumises à des températures extrêmes. Dans le cas de pièces surmoulées, pour assurer cette étanchéité, il faut veiller à ce que la longueur de contact entre l'insert et la résine soit suffisamment importante. En outre, l'insert doit être également dégraissé et ne pas comporter de défaut de surface. Dans certains cas, il est nécessaire de déposer sur l'insert une enveloppe silicone qui garantira l'étanchéité.

Une autre difficulté de fabrication est liée au fait qu'il est impératif de maîtriser l'absence de bulle dans la résine, à proximité des inserts. La présence de bulle induit des décharges partielles qui vont progressivement détériorer l'isolant solide. Il s'avère qu'en pratique, à terme, la pièce supposée isolante devient conductrice.

Il est donc nécessaire de réaliser systématiquement sur la pièce complète une mesure du seuil d'extinction des décharges partielles. Ce contrôle nécessite un équipement spécifique avec cage de Faraday parfaite et appareils de détection. L'investissement de ce type d'équipement est très élevé.

Les prises de courant rapportées sont moins sensibles aux décharges partielles mais nécessitent pour garantir l'étanchéité que les surfaces des portées de joint respectent la rugosité nécessaire. L'assemblage est plus cher car nécessite l'utilisation d'un joint et un dispositif de serrage de la prise de courant.

Comparativement aux technologies d'injection de matière thermoplastique, le moulage des pièces en résine époxy nécessite des temps d'injection plus longs. Le coût de main d'oeuvre est également plus important. La résine époxy nécessite enfin des épaisseurs de parois plus importantes.

En ce qui concerne la deuxième technologie, le tube qui doit par nature être isolant électriquement est réalisé à partir d'un enroulement filamentaire à base de fibres de verre pré imprégnées dans de la résine époxyde.

L'assemblage du tube avec la prise de courant est jusqu'à présent réalisé uniquement par collage. Et compte tenu de ce processus de collage, il est nécessaire de systématiquement usiner les diamètres externes du tube fabriqué pour obtenir des tolérances dimensionnelles nécessaires aux assemblages par collage.

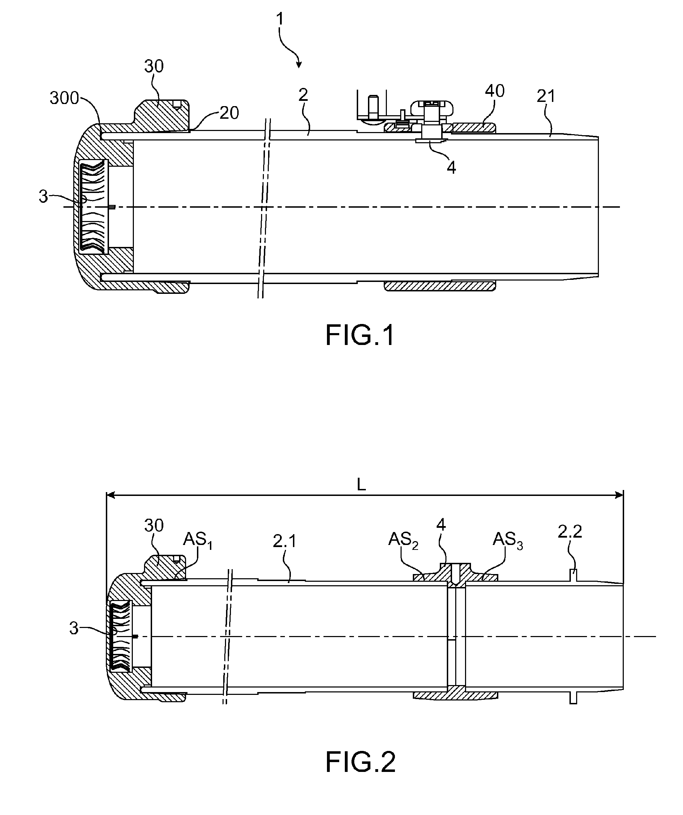

Un puits fusible 1 selon l'état de l'art est représenté en figure 1 : il comprend essentiellement un tube 2 à base de fibres de verre noyées dans une résine époxyde et aux diamètres externes 20, 21 usinés et assemblés uniquement par collage avec respectivement avec un capot 30 solidaire d'une prise de courant métallique 3 et un contact fusible 4 supporté par une bague 40 et traversant le tube 2 au niveau de son diamètre 21.

Les différentes étapes de fabrication du puits fusible 1 sont jusqu'à ce jour les suivantes.

En ce qui concerne la fabrication du tube 2 proprement dite :
1. enroulement de fibres de verre pré imprégnées par une résine époxyde sur un mandrin de grande longueur. En pratique, pour obtenir l'épaisseur désirée du tube 2, il est nécessaire de réaliser un empilement de couches, ce qui se traduit par une pluralité d'enroulement, typiquement une série de quatorze allers-retours sur le mandrin. Cette étape est délicate à réaliser et nécessite une grande maîtrise de la part des opérateurs concernés.
2. polymérisation du tube 2 dans un four.
3. déchaussage du tube 2 du mandrin.
4. sciage à la longueur désirée.
5. usinage des diamètres externes 20, 21. La difficulté de cette étape d'usinage réside essentiellement dans le fait que la matière étant constituée de fibres longues, il y a un risque d'effilochage de ces fibres.
6. lavage

En ce qui concerne les opérations d'assemblage par collage :
1. dépôt de colle époxyde à l'intérieur d'une rainure 300 du capot 30 de la prise de courant métallique 3. cette étape s'avère en pratique délicate.
2. insertion du tube 2 au niveau de son diamètre 20 dans la rainure 30 de la prise de courant 3 et attente pour polymérisation de la colle époxyde.
3. mise en place du contact fusible 4 autour du diamètre 21 du tube 2 et collage par colle époxyde à nouveau et attente pour polymérisation.

Toutes les pièces ainsi assemblées subissent préalablement une opération de dégraissage.

Un puits fusible ainsi fabriqué doit outre le fait d'avoir une tenue mécanique entre les différentes parties, présenter une étanchéité quasi-parfaite. En effet, pendant son fonctionnement, le tube 2 est sous pression de gaz et sollicité thermiquement par l'échauffement du fusible. Les contraintes de fonctionnement imposent un taux de fuite maximal du gaz isolant SF6 (contenu dans une cuve et situé à l'extérieur du tube du puits fusible 1) de 4*10⁻⁷ cm3.bar/s et ce pendant une durée de 30 ans à des températures de l'ordre de 100°C. Ce taux de fuite correspond à la perte de pression des gaz SF6 maximale admissible permettant de garantir les performances du poste de distribution électrique et ce, pendant une durée de 30 ans.

Le document US 3, 784, 235 concerne un assemblage de jonction par encliquetage/collage entre deux tubes 10, 12 dont le premier en métal et le deuxième en plastique renforcé. Un dépôt de colle 40, 42 respectivement sous la forme d'un film adhésif et d'une colle liquide, est effectué sur chacune des parties de tubes à encliqueter respectivement sur la portion d'extrémité du tube 10,10',10'', 10''' et la portion d'extrémité du tube 12, 12', 12'', 12''' (voir ensemble des figures 1 à 4).

Le document US 966,772 concerne un assemblage de jonction par encliquetage/ collage entre deux tubes thermoplastiques. Après encliquetage, la colle est injectée dans une cavité formée entre l'extrémité des deux tubes.

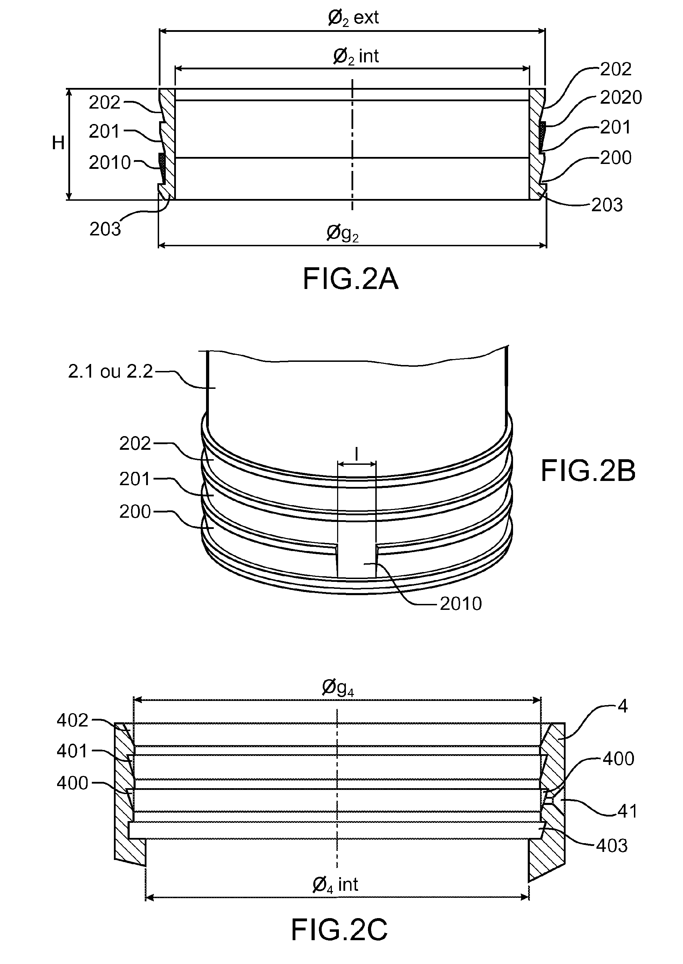

Le document GB 1 311 318 concerne le montage d'un silencieux dans une unité de compresseur 10 avec deux assemblages par jonction entre deux tubes. Un des assemblages montré aux figures 2 à 4 est relatif à un tube 42 de décharge du silencieux en acier dans un bossage 26 percé 30 de la culasse 20 du compresseur et est réalisé par insertion du tube 42 dans le perçage 30 avec ajustement serré entre les portions 50 et 34 (voir page 2 lignes 100-105) ) jusqu'à mise en butée du chanfrein 32 puis injection de la colle liquide 56 dans le chanfrein d'extrémité. L'autre des assemblages montré aux figures 5 et 6 est relatif à une autre portion tubulaire de décharge 100 dans laquelle est logé un conduit de décharge 102 et est réalisé par emmanchement partiel du conduit 102 (figure 5), puis dépôt de colle liquide 115 à l'interface 102, 116 en extrémité (voir plus précisément colonne 4, lignes 5-12) prévue entre le conduit 102 et le tube 100 puis emmanchement final jusqu'à mise en butée avec l'épaulement interne 108 du tube 100, l'étape d'emmanchement final permettant de recouvrir la surface extérieure de la colle liquide 115. Une fois l'emmanchement final réalisé, il est réalisé un sertissage 118, par l'extérieur du tube 100 (figure 6).

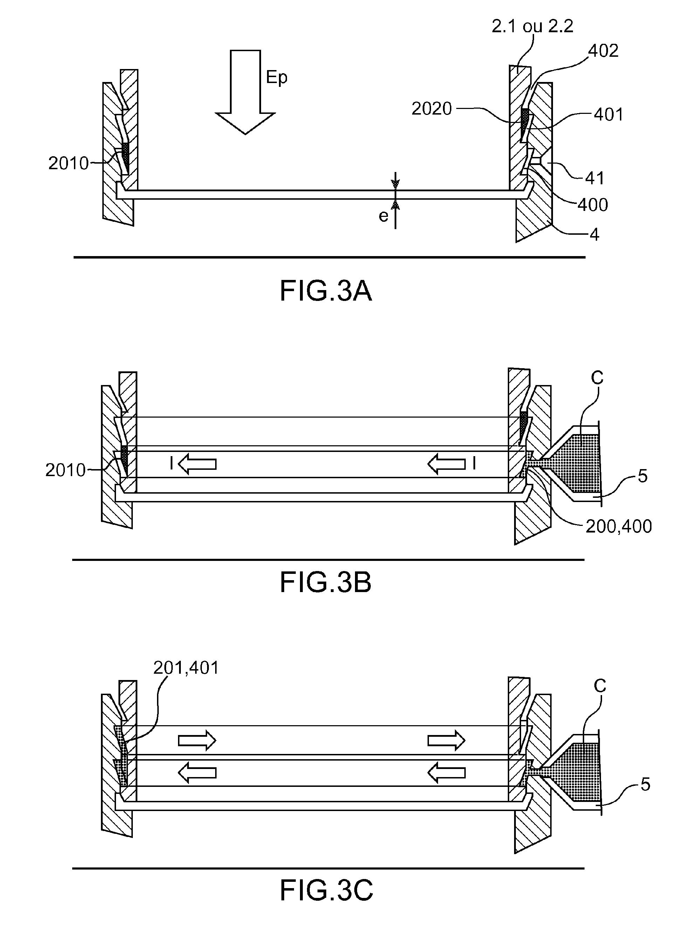

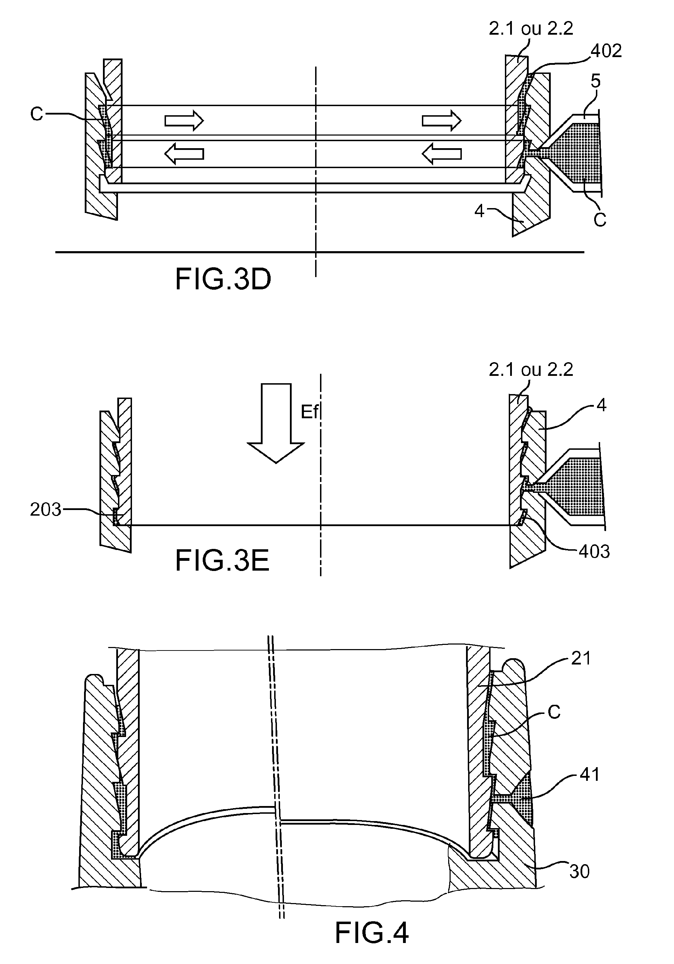

Le document EP 0 253 347 concerne un échafaudage portable tubulaire 10 et décrit un assemblage de jonction entre un raccord 26 en T et un tube de structure (échelon 18 ou montant vertical 20) en aluminium (voir colonne 6, ligne 46). Ce document décrit également un assemblage par emboîtement d'une portion de raccord 26 dans le tube de structure (voir figure 3) et par injection de colle dans une ouverture 28 du tube prévue à cet effet, la colle injectée circulant dans les gorges circulaires 30-32 par le canal 33 les reliant (voir figure 3 également).

Le document US 5, 655, 292 concerne un assemblage d'un dispositif porte-fusible HT, par collage comme présenté ci-dessus.

Le document US 4, 746, 381 concerne un assemblage entre un tube fusible 12 isolant et un capot fusible 14 conducteur qui consiste en un emmanchement du tube 12 dans la partie recourbée du capot 14 dans laquelle est présente une colle 30.

Un puits fusible 1 réalisé selon l'art antérieur n'est pas satisfaisant pour une raison de coût de revient, à la fois pour la fabrication du tube en elle-même et pour les opérations d'assemblage.

En outre, la maîtrise du processus est également liée à un tour de main de l'opérateur qui est difficilement automatisable.

Les inventeurs ont ainsi pensé à utiliser en tant que tube isolant électriquement un tube en matière thermoplastique moulée.

Le but de l'invention est alors de proposer une solution d'assemblage de jonction entre deux tubes dont au moins un en matière thermoplastique moulée qui pallie les inconvénients des technologies existantes et donc de proposer une solution à moindre coût, et notamment sans reprise d'usinage.

Un but particulier est de proposer une telle solution pour un dispositif porte fusible, tel qu'un puits fusible pour appareillage haute ou moyenne tension, rempli d'un gaz isolant diélectrique, typiquement du SF6, afin qu'il présente en fonctionnement un taux de fuite maximal de l'ordre de 4*10⁻⁷cm3.bar/s.

### EXPOSÉ DE L'INVENTION

Pour ce faire, l'invention a pour objet un procédé d'assemblage de jonction entre deux tubes dont au moins un est en matière thermoplastique moulée, selon lequel on réalise un assemblage mixte d'encliquetage/collage d'extrémités des deux tubes, grâce aux étapes suivantes :
a/- emmanchement partiel et à force d'une partie d'extrémité d'un tube dans une partie d'extrémité de l'autre tube sans encliquetage ;
b/- injection d'une colle sous forme liquide ou pâteuse entre les parties d'extrémité des tubes emmanchées partiellement l'une dans l'autre;
c/- arrêt de l'injection ;
d/- emmanchement final jusqu'à mise en butée longitudinale du tube de moindre diamètre; l'emmanchement final provoquant simultanément l'encliquetage et le remplissage des espaces entre zones encliquetées par compression de la colle;
e/- séchage ou polymérisation de la colle comprimée.

La solution selon l'invention consiste en un assemblage mixte encliqueté/collé entre au moins un tube thermoplastique injecté sans reprise d'usinage et un autre tube, en particulier un tube métallique. L'encliquetage, aussi appelé clipsage, assure la tenue mécanique. Le collage améliore la tenue mécanique et assure l'étanchéité de l'assemblage. L'étape d'emmanchement ou autrement dit étape de pré encliquetage permet d'aménager un ou plusieurs canaux permettant une injection de la colle et ainsi la mise en oeuvre du procédé se trouve simplifiée et automatisable.

L'assemblage selon l'invention est fiable et irréversible et permet de répondre aux contraintes d'étanchéité en fonctionnement d'un puits fusible haute ou moyenne tension telles qu'évoquées ci-dessus : un taux de fuite au maximum égal à 4*10⁻⁷cm3.bar/s pendant une durée de vie de 30 ans et à des températures de l'ordre de 100°C.

Selon un mode de réalisation, particulièrement avantageux pour la réalisation d'assemblages de puits fusible, préalablement à l'étape a/ on réalise les étapes suivantes :
- réalisation de gorges à la périphérie externe d'une des parties d'extrémité d'un premier tube, et de canaux, dit canal de circulation, reliant chacun deux gorges périphériques consécutives du premier tube;
- réalisation de gorges à la périphérie interne d'une des parties d'extrémités d'un deuxième tube et d'un canal, dit canal d'injection, débouchant à la fois à l'extérieur du deuxième tube et sur au moins une de ses gorges; lesdites gorges du premier et deuxième tubes étant complémentaires entre elles pour permettre leur encliquetage mutuel.

L'étape a/ est selon ce mode réalisée de sorte à avoir le premier tube comprimé radialement avec au moins deux de ses gorges emmanchées dans le deuxième tube et les portions périphériques séparant deux gorges consécutives du premier tube en appui latéral contre les portions périphériques du deuxième tube séparant deux de ses gorges consécutives;

L'étape b/ est selon ce mode réalisée dans le canal d'injection de manière à remplir successivement les deux gorges du premier tube emmanchées et celles du deuxième tube depuis le canal d'injection en passant par le canal de circulation jusqu'à ce que ladite colle atteigne une zone en sortie des gorges, à l'interface entre les deux tubes et visible depuis l'extérieur de ceux-ci;

L'étape d/ est selon ce mode réalisée du premier tube dans le deuxième tube jusqu'à mise en butée longitudinale; l'emmanchement final provoquant simultanément l'encliquetage des gorges entre elles et le remplissage des espaces entre gorges par compression de la colle.

Ainsi, on peut utiliser des moyens automatisables, tels qu'une buse d'injection qui remplit le canal d'injection de la colle avec un remplissage optimum des espaces entre gorges.

Selon une variante, le procédé d'assemblage concerne au moins un tube thermoplastique moulé par injection.

La colle liquide ou pâteuse est une colle polyuréthane bi composant.

De préférence, l'un des tubes est en matière thermoplastique moulée et l'autre des tubes est métallique.

Pour assurer une tenue satisfaisante de la colle, il est préférable en outre de réaliser :
- préalablement à l'étape d'emmanchement a/, une étape de traitement de surfaces au moins de la partie d'extrémité du tube en matière thermoplastique par effet corona de manière à obtenir une tension superficielle desdites surfaces au moins égale à 45 N.m⁻¹.
- préalablement à l'étape d'emmanchement a/, une étape de traitement de surfaces au moins de la partie d'extrémité du tube métallique dégraissage de manière à obtenir une tension superficielle desdites surfaces au moins égale à 42 N.m⁻¹.

L'invention concerne également un assemblage de jonction, obtenu de préférence selon le procédé décrit ci-dessus, entre deux tubes dont au moins un est en matière thermoplastique moulée.

Le premier tube présente extérieurement à une de ses extrémités une série de gorges successives parallèles entre elles, reliées deux à deux entre elles par un canal et prolongées par un chanfrein d'entrée.

Le deuxième tube présente intérieurement à une de ses extrémités une série de gorges successives parallèles entre elles, prolongées par une gorge d'entrée et complémentaires aux gorges du premier tube, le diamètre intérieur des portions périphériques de part et d'autre des gorges du deuxième tube étant inférieur au diamètre extérieur des portions périphériques de part et d'autre des gorges du premier tube. Un tel assemblage de jonction est réalisé avec l'extrémité du premier tube emmanchée dans l'extrémité du deuxième tube avec encliquetage des gorges du premier et deuxième tubes entre elles et mise en butée longitudinale du chanfrein d'entrée du premier tube dans la gorge d'entrée du deuxième tube et avec les espaces entre zones encliquetées et dans les canaux remplis d'une colle.

Selon une variante, l'assemblage selon l'invention comprend un tube réalisé en matière isolante électriquement et un tube réalisé en matière conductrice électriquement.

L'invention vise une application préférée, à savoir un dispositif porte fusible, tel qu'un puits fusible, pour un appareillage haute ou moyenne tension, tel qu'un interrupteur, comprenant au moins un assemblage mentionné ci-dessus.

De préférence, un dispositif porte fusible selon l'invention, comprend trois assemblages sur sa longueur dont :
- un premier assemblage entre un bloc tubulaire d'amenée du courant électrique et un tube de plus grande longueur en matière isolante électriquement ;
- un deuxième assemblage entre le tube de plus grande longueur et une électrode tubulaire située dans la partie intermédiaire ;
- un troisième assemblage entre l'électrode tubulaire et un tube de plus petite longueur en matière isolante électriquement.

Avantageusement, un dispositif porte fusible selon l'invention extérieurement sous la pression d'un gaz isolant diélectrique, tel que du SF6, présente au niveau de chaque assemblage, un taux de fuite du gaz isolant inférieur ou égal à 4.10⁻⁷ cm3.bar/s, le taux de fuite étant celui à la fois de l'extérieur des tubes vers l'intérieur et vice-versa.

L'invention peut concerner concerne en outre un poste de distribution électrique à moyenne ou haute tension à isolation gazeuse, de type SF6 comprenant au moins un dispositif porte fusible décrit ci-dessus. Pour un poste de distribution en triphasé, il pourra être prévu un ensemble de trois puits fusibles selon l'invention, c'est-à-dire un par pôle.

L'invention peut concerner également un isolateur électrique pour ligne haute ou moyenne tension comprenant un assemblage décrit ci-dessus et dont le tube en matière isolante est une portion du corps d'isolateur et dont le tube en matière conductrice est une portion d'une armature, telle qu'une bride de fixation à un support ou une borne de connexion à une ligne (HT ou MT).

L'invention peut concerner enfin tout appareillage de commutation électrique à haute ou moyenne tension comprenant un assemblage tel que décrit précédemment et dont le tube en matière isolante est une portion de l'enveloppe extérieure de la traversée de raccordement à une ligne haute ou moyenne tension et le tube en matière conductrice est une portion d'une armature, telle qu'une bride de fixation à un support ou une borne de connexion à une ligne (HT ou MT).

### BRÈVE DESCRIPTION DES DESSINS

D'autres améliorations ou avantages ressortiront mieux à la lecture de la description détaillée faite, à titre illustratif et non limitatif, en référence aux figures 1 à 4 parmi lesquelles :
- la figure 1 est une vue en coupe longitudinale d'un puits fusible d'un appareillage moyenne tension MT selon l'état de l'art,
- la figure 2 est une vue en coupe longitudinale d'un puits fusible d'un appareillage moyenne tension MT selon l'invention,
- les figures 2A à 2B sont des vues respectivement en coupe partielle longitudinale et en perspective d'une extrémité d'un tube thermoplastique en tant qu'élément d'un assemblage selon un mode de réalisation de l'invention servant à réaliser un puits fusible selon la figure 2,
- la figure 2C est une vue en coupe partielle longitudinale d'une extrémité d'une prise de courant métallique, en tant qu'élément d'un assemblage selon un mode de réalisation de l'invention servant à réaliser un puits fusible selon la figure,
- les figures 3A à 3E montrent en vue de coupe partielle longitudinale les différentes étapes d'un assemblage selon un mode de réalisation de l'invention servant à réaliser un puits fusible selon la figure 2,
- la figure 4 est une vue en coupe partielle longitudinale d'un assemblage selon l'invention obtenu selon le procédé des figures 3A à 3E.

### EXPOSÉ DÉTAILLÉ DE MODES DE RÉALISATION PARTICULIERS

La figure 1 représente un puits fusible 1 d'un appareillage obtenu à partir d'un procédé selon l'état de l'art : il a été décrit en préambule et ne le sera pas donc plus ici.

La figure 2 montre un puits fusible 1 d'un appareillage électrique moyenne tension MT selon l'invention comprenant sur sa longueur L trois assemblages AS obtenus chacun à partir du procédé selon l'invention.

Le premier assemblage AS1 est réalisé entre le capot arrière métallique 30 solidaire de la prise de courant 3 et un tube 2.1 en matière thermoplastique moulée par injection, qui est le tube thermoplastique de plus grande longueur.

Le deuxième assemblage AS2 est réalisé entre une électrode 4 dite électrode intermédiaire et le tube 2.1.

Le troisième assemblage AS3 est réalisé entre l'électrode intermédiaire 4 et l'autre tube 2.2 en matière thermoplastique moulée par injection, qui est le tube thermoplastique de plus courte longueur.

Dans chaque assemblage AS1, AS2, AS3, le moulage par injection est prévu pour réaliser aux extrémités concernées de chaque tube thermoplastique 2 (2.1 ou 2.2), une série de trois gorges 200 successives parallèles entre elles (figures 2A et 2B) prolongée par un chanfrein d'entrée 203.

Tel que représenté aux figures 2A et 2B, le profil des trois gorges 200, 201, 202 est triangulaire (dent tronquée) et le profil et les dimensions identiques d'une dent à l'autre. Le diamètre extérieur Øg2 des portions périphériques de part et d'autre des gorges 200, 201, 202 est supérieur au diamètre extérieur 02ext du tube 2.1 ou 2.2 au-delà de leur extrémité de hauteur H.

Comme plus visible en figure 2B, entre deux gorges consécutives 200, 201 ou 201, 202 est réalisé un canal de circulation 2010 ou 2020 de largeur 1 permettent une communication entre toutes les gorges. Les deux canaux de circulation ainsi réalisés sont diamétralement opposés dans le mode de réalisation illustré.

A titre d'exemple numérique :
Øg2 ≃ 100 mm ; Ø2ext ≃ 99 mm ; H ≃ 30 mm ; 1 ≃ 5 mm, avec sensiblement les mêmes tolérances de fabrication.

Pour chaque assemblage AS1, AS2, AS3 la pièce métallique tubulaire 30 ou 4 a, comme représenté en figure 2C, sensiblement la même forme complémentaire que chacun des tubes thermoplastique 2.1 ou 2.2. De préférence, les pièces métalliques sont en aluminium.

Ainsi, l'électrode métallique 4 représentée comprend trois gorges 400, 401, 402 successives parallèles entre elles avec un profil triangulaire (dent tronquée) identique à celui de la pièce thermoplastique 2.1 ou 2.2. Les trois gorges triangulaires sont prolongées par une gorge d'entrée à section rectangulaire 403.

Pour permettre l'encliquetage recherché selon l'invention, le diamètre intérieur des portions périphériques de part et d'autre des gorges 400, 401, 402 (diamètre sur dent) de la pièce métallique tubulaire 4 Øg4 est inférieur au diamètre extérieur Øg2 des portions périphériques de part et d'autre des gorges 200, 201, 202 (diamètre sur dent) du tube thermoplastique 2.1 ou 2.2.

A titre d'exemple numérique, la différence de diamètre sur dent Øg2-Øg4 est de l'ordre de 1 mm.

En outre, le diamètre intérieur de la pièce tubulaire 4 Ø4int est égal au diamètre intérieur Ø2int du tube thermoplastique 2.1 ou 2.2.

A titre d'exemple numérique :
Ø2int ≃4int≃ 92 mm.

En outre, l'électrode comprend un canal d'injection 41 débouchant à la fois à l'extérieur de l'électrode 4 et sur la première gorge triangulaire 400. Ce canal d'injection 41 a pour fonction de permettre l'alimentation de la colle époxyde comme expliqué ci-après.

Le processus d'assemblage selon l'invention entre un tube thermoplastique 2.1 ou 2.2 et la pièce métallique 4 va maintenant être expliqué en référence aux figures 3A à 3E.
a/ On réalise tout d'abord une étape d'emmanchement partiel et à force de l'extrémité H du tube thermoplastique 2.1 ou 2.2 dans l'autre tube métallique 4 sans qu'il y ait encliquetage.
   Plus précisément, le tube plastique 2.1 ou 2.2 est engagé à force selon la flèche Ep dans la pièce métallique 4, passe successivement deux dents 402 et 401 et est arrêté à distance e de la butée finale constituée par la gorge d'entrée rectangulaire 403 (figure 3A). A titre d'exemple numérique, la distance e est de l'ordre de 2 mm.
   Dans cette position selon la figure 3A, le tube thermoplastique 2.1 ou 2.2 est radialement comprimé, en moyenne de 1 mm au diamètre avec les exemples numériques donnés ci-dessus.
b/ On injecte alors à l'aide d'une buse 5 une colle polyuréthane bi composant C sous forme liquide entre les extrémités des tubes 2.1 ou 2.2 et 4 emmanchées partiellement l'une dans l'autre. Plus exactement, la buse 5 est appliquée dans le cône du canal d'injection 41 et l'injection de la colle C est réalisée. La colle C remplit les premières gorges triangulaires 200, 400 en circulant de chaque côté de la périphérie comme symbolisé par les flèches I (figure 3B).
   Puis, le flux de colle C se rejoint et alimente, grâce au canal de circulation 2010 (figure 2B) les deuxièmes gorges consécutives qui sont alors remplies de chaque coté de la périphérie (figure 3C)
   Ensuite, le flux de colle C se rejoint au niveau du canal de circulation 2020, ce qui laisse émerger la colle C à l'extérieur au dessus de la buse d'injection 5 (figure 3D), c'est-à-dire visuellement au dessus de la troisième gorge 402.
c/ L'injection de colle C est alors arrêtée.
d/ On réalise alors un emmanchement final jusqu'à la mise en butée. Plus exactement, on réalise un emmanchement final selon la flèche Ef pour mettre en butée le chanfrein d'entrée 203 dans la gorge rectangulaire 403 (figure 3E). Le tube thermoplastique 2.1 ou 2.2 reprend alors sa forme initiale par encliquetage de ses dents dans celles complémentaires du tube métallique 4.
   Simultanément, les espaces remplis entre zones encliquetées diminuent de volume ce qui provoque la compression de la colle C et ainsi un remplissage et donc une tenue mécanique optimums.
e/ On laisse un temps d'attente pour chaque assemblage AS1, AS2 ou AS3 pour laisser polymériser la colle C polyuréthane bi composant.

Dans l'application principale visée (puits fusible pour appareillage électrique HT ou MT), on réalise un contrôle d'étanchéité pour vérifier que le taux de fuite entre l'intérieur et l'extérieur de la jonction est inférieur ou égal à à 4.10⁻⁷ cm3.bar/s.

En figure 4, on voit en coupe longitudinale partielle l'assemblage AS1 finalisé entre le tube thermoplastique injecté 2.1 et le capot arrière métallique 30 de la prise de courant 3 par encliquetage et collage avec la colle C.

Préalablement à la réalisation de chacun des assemblages AS1, AS2 ou AS3, et afin d'assurer une tenue satisfaisante de la colle C et ainsi garantir l'étanchéité avec le taux de fuite recherché, il est préférable de réaliser sur les tubes les préparations de surfaces suivantes :
- sur la périphérie et au moins sur la hauteur H des tubes thermoplastiques, un traitement par effet corona pour obtenir une tension superficielle supérieure ou égale à 45 N.m^{-1.}
- à l'intérieur des tubes métalliques 4 ou 30, un dégraissage pour obtenir une tension superficielle supérieure ou égale à 42 N.m^{-1.}

La solution qui vient d'être décrite permet de réaliser un changement de la technologie de fabrication des puits fusibles et ainsi de réduire significativement le coût de cette fonction, jusqu'à 45% par rapport à la technologie actuelle décrite en référence à la figure 1. En effet, grâce à la maîtrise de la solution d'assemblage par encliquetage/collage, il est possible d'utiliser pour un puits fusible des tubes en matière thermoplastique injectés dont le coût est très inférieur aux tubes isolants actuels en résine époxyde.

Au niveau de la mise en oeuvre de l'invention, les avantages sont les suivants :
1/ injection de la colle simple.
   Il suffit de mettre une buse 5 dans le cône 41 de la pièce métallique et de réaliser l'injection. Un pistolet manuel bi composant peut le cas échéant être utilisé et l'opérateur peut ainsi visualiser le remplissage complet grâce à l'apparition de la colle au dessus de la gorge 402 comme représenté en figure 3D.
   Il est tout à fait possible d'envisager l'injection avec un système connu composé de réservoirs contenant les composants de la colle A et B de la colle polyuréthane et équipé de doseurs permettant de contrôler le volume injecté. Avec un tel système, il n'est alors plus nécessaire de contrôler visuellement l'apparition de la colle et l'opération peut être automatisée, ce qui a en outre comme avantage de ne pas avoir à réaliser d'opération manuelle supplémentaire d'essuyage de surplus de colle.
2/ confinement de la colle C à l'intérieur des gorges, ce qui est bénéfique en ce qui concerne l'hygiène et de la sécurité. En d'autres termes, il n'y a pas, comme dans le procédé d'obtention d'un puits fusible selon la figure 1, de surfaces importantes revêtues de colle en contact avec l'air. Il y a donc moins de risque pour un opérateur.
3/ optimisation de la quantité de colle injectée. Le volume de colle utilisé est faible et optimisé. Dans l'application puits fusible, dans laquelle le diamètre moyen de collage est de l'ordre de 100 mm, correspondant à une longueur approximative de 628 mm de longueur de gorges remplis de colle, la quantité utilisée est typiquement de l'ordre de 6 grammes.

Le coût matière de la colle est donc extrêmement réduit vis-à-vis du volume nécessaire pour réaliser un puits fusible complet, c'est-à-dire typiquement égal à 3*6g ≃ 18 grammes.

Au niveau du résultat attendu pour un puits fusible selon l'invention, le principal avantage est la fiabilité élevée du procédé.

Avec le recul actuel et le contrôle d'étanchéité à 100 % de chaque puits fusible comprenant les trois assemblages AS1, AS2 et AS3, aucun de ceux-ci encliqueté/collé n'a été déclaré non conforme selon les normes de fabrication de la demanderesse.

L'association d'un encliquetage assurant une tenue mécanique et d'un collage assurant la tenue mécanique et l'étanchéité permet donc de fiabiliser le procédé d'assemblage par jonction entre les deux tubes.

Le déplacement radial du tube thermoplastique au moment de l'emmanchement (encliquetage) final participe également à la tenue du collage grâce à la compression de la colle.

D'autres réalisations et perfectionnements peuvent être réalisés sans pour autant sortir du cadre de l'invention telle que décrite. Par exemple, si dans le mode de réalisation illustré, la colle utilisée est une colle polyuréthane bi composant, on peut tout aussi bien envisager l'utilisation d'une autre colle dans la mesure où elle assure à la fois la tenue mécanique entre les tubes que l'on cherche à assembler par jonction et l'étanchéité requise par l'application.

## Revendications

1. Procédé d'assemblage de jonction entre deux tubes (2.1 ou 2.2, 30 ou 4) dont au moins un est en matière thermoplastique moulée, dans lequel on réalise un assemblage mixte d'encliquetage/collage d'extrémités des deux tubes, grâce aux étapes suivantes :
a/ emmanchement partiel et à force d'une partie d'extrémité d'un tube dans une partie d'extrémité de l'autre tube sans encliquetage,
b/ injection d'une colle sous forme liquide ou pâteuse entre les parties d'extrémité des tubes emmanchées partiellement l'une dans l'autre,
c/ arrêt de l'injection,
d/ emmanchement final jusqu'à mise en butée longitudinale du tube de moindre diamètre, l'emmanchement final provoquant simultanément l'encliquetage et le remplissage des espaces entre zones encliquetées par compression de la colle;
e/ séchage ou polymérisation de la colle comprimée.

2. Procédé d'assemblage de jonction selon la revendication 1, selon lequel
préalablement à l'étape a/ on réalise les étapes suivantes :
- réalisation de gorges à la périphérie externe d'une des parties d'extrémité d'un premier tube, et de canaux, dit canal de circulation, reliant chacun deux gorges périphériques consécutives du premier tube,
- réalisation de gorges à la périphérie interne d'une des parties d'extrémités d'un deuxième tube et d'un canal, dit canal d'injection, débouchant à la fois à l'extérieur du deuxième tube et sur au moins une de ses gorges; lesdites gorges du premier et deuxième tubes étant complémentaires entre elles pour permettre leur encliquetage mutuel,
l'étape a/ est réalisée de sorte à avoir le premier tube comprimé radialement avec au moins deux de ses gorges emmanchées dans le deuxième tube et les portions périphériques séparant deux gorges consécutives du premier tube en appui latéral contre les portions périphériques du deuxième tube séparant deux de ses gorges consécutives,
l'étape b/ est réalisée dans le canal d'injection de manière à remplir successivement les deux gorges du premier tube emmanchées et celles du deuxième tube depuis le canal d'injection en passant par le canal de circulation jusqu'à ce que la colle atteigne une zone en sortie des gorges, à l'interface entre les deux tubes et visible depuis l'extérieur de ceux-ci,
l'étape d/ est réalisée du premier tube dans le deuxième tube jusqu'à mise en butée longitudinale; l'emmanchement final provoquant simultanément l'encliquetage des gorges entre elles et le remplissage des espaces entre gorges par compression de la colle.

3. Procédé selon la revendication 1 ou 2, selon lequel au moins un tube thermoplastique est moulé par injection.

4. Procédé selon la revendication 3, selon lequel la colle liquide ou pâteuse est une colle époxyde.

5. Procédé selon l'une des revendications précédentes, selon lequel l'un des tubes est en matière thermoplastique moulée et l'autre des tubes est métallique.

6. Procédé selon la revendication 5, comprenant en outre préalablement à l'étape d'emmanchement a/, une étape de traitement de surfaces au moins de la partie d'extrémité du tube en matière thermoplastique par effet corona de manière à obtenir une tension superficielle desdites surfaces au moins égale à 45 N.m⁻¹_{.}

7. Procédé selon la revendication 5 ou 6, comprenant en outre préalablement à l'étape d'emmanchement a/, une étape de traitement de surfaces au moins de la partie d'extrémité du tube métallique dégraissage de manière à obtenir une tension superficielle desdites surfaces au moins égale à 42 N.m⁻¹.

8. Assemblage (AS1, AS2, AS3) de jonction entre deux tubes (2.1 ou 2.2, 30 ou 4) dont au moins un (2.1 ou 2.2) est en matière thermoplastique moulée, dans lequel :
- le premier tube (2.1 ou 2.2) présente extérieurement à une de ses extrémités une série de gorges (200, 201, 202) successives parallèles entre elles, reliées deux à deux entre elles par un canal (2010, 2020) et prolongées par un chanfrein d'entrée (203),
- le deuxième tube (4) présente intérieurement à une de ses extrémités une série de gorges (400, 401, 402) successives parallèles entre elles, prolongées par une gorge d'entrée (403) et complémentaires aux gorges (200, 201, 202) du premier tube, le diamètre intérieur Øg4 des portions périphériques de part et d'autre des gorges (400, 401, 402) du deuxième tube étant inférieur au diamètre extérieur Øg2 des portions périphériques de part et d'autre des gorges (200, 201, 202) du premier tube (2.1 ou 2.2),
- l'extrémité du premier tube (2.1 ou 2.2) est emmanchée dans l'extrémité du deuxième tube (4) avec encliquetage des gorges du premier et deuxième tubes (200, 201, 202 ; 400, 401, 402) entre elles et mise en butée longitudinale du chanfrein d'entrée (203) du premier tube dans la gorge d'entrée (403) du deuxième tube et dans lequel les espaces entre zones encliquetées et dans les canaux sont remplis d'une colle C.

9. Assemblage (AS1, AS2, AS3) selon la revendication 8, comprenant un tube (2.1, 2.2) réalisé en matière isolante électriquement et un tube (30, 4) réalisé en matière conductrice électriquement.

10. Dispositif porte fusible, tel qu'un puits fusible, pour un appareillage haute ou moyenne tension, tel qu'un interrupteur, comprenant au moins un assemblage selon la revendication 8 ou 9.

11. Dispositif porte fusible selon la revendication 10, comprenant trois assemblages sur sa longueur dont :
- un premier assemblage (AS1) entre un bloc tubulaire d'amenée du courant électrique (3) et un tube (2.1) de plus grande longueur en matière isolante électriquement ;
- un deuxième assemblage (AS2) entre le tube (2.1) de plus grande longueur et une électrode tubulaire (4) située dans la partie intermédiaire,
- un troisième assemblage (AS3) entre l'électrode tubulaire (4) et un tube (2.2) de plus petite longueur en matière isolante électriquement.

12. Dispositif porte fusible selon l'une des revendications 10 ou 11, extérieurement sous la pression d'un gaz isolant diélectrique, tel que du SF6 dans lequel au niveau de chaque assemblage, le dispositif présente un taux de fuite du gaz isolant inférieur ou égal à 4.10⁻⁷ cm3.bar/s, le taux de fuite étant celui à la fois de l'extérieur des tubes vers l'intérieur et vice-versa.

13. Poste de distribution électrique à moyenne ou haute tension à isolation gazeuse, de type SF6 comprenant au moins un dispositif porte fusible selon l'une des revendications 10 à 12.

14. Isolateur électrique pour ligne haute ou moyenne tension (HT ou MT) comprenant un assemblage selon la revendication 9 dont le tube en matière isolante est une portion du corps d'isolateur et dont le tube en matière conductrice est une portion d'une armature, telle qu'une bride de fixation à un support ou une borne de connexion à une ligne (HT ou MT).

15. Appareillage de commutation électrique à haute ou moyenne tension comprenant un assemblage selon la revendication 9 dont le tube en matière isolante est une portion de l'enveloppe extérieure de la traversée de raccordement à une ligne haute ou moyenne tension et le tube en matière conductrice est une portion d'une armature, telle qu'une bride de fixation à un support ou une borne de connexion à une ligne (HT ou MT).

## Patentansprüche

1. Fügeverfahren zum Verbinden zwischen zwei Rohren (2.1 oder 2.2, 30 oder 4), von denen mindestens eines ein thermoplastisches Formteil ist,
wobei
ein Hybridfügen zum Verrasten/Verkleben der Enden der beiden Rohre durchgeführt wird, und zwar mit nachfolgenden Schritten:
a/ teilweises Einschieben eines Endabschnitts eines Rohres unter Kraftaufwand in einen Endabschnitt des anderen Rohres ohne Verrasten,
b/ Einspritzen von Klebstoff in flüssiger bzw. pastöser Form zwischen die Endabschnitte der teilweise ineinandergeschobenen Rohre,
c/ Unterbrechen des Einspritzvorgangs,
d/ endgültiges Einschieben bis zum longitudinalen Anschlagen des im Durchmesser geringeren Rohres, wobei durch das endgültige Einschieben gleichzeitig das Verrasten und Auffüllen der Freiräume zwischen verrasteten Bereichen durch Komprimieren des Klebstoffs hervorgerufen werden;
e/ Trocknen oder Polymerisation des komprimierten Klebstoffs.

2. Fügeverfahren zum Verbinden nach Anspruch 1, wobei vor dem Schritt a/ die nachfolgenden Schritte durchgeführt werden:
- Erzeugen von Nuten am Außenumfang eines der Endabschnitte eines ersten Rohres sowie von Kanälen, Zirkulationskanäle genannt, die jeweils zwei aufeinanderfolgende Umfangsnuten des ersten Rohres verbinden,
- Erzeugen von Nuten am Innenumfang eines der Endabschnitte eines zweiten Rohres sowie eines Kanals, Einspritzkanal genannt, der zugleich außerhalb des zweiten Rohres und an zumindest einer seiner Nuten ausmündet; wobei die Nuten des ersten und des zweiten Rohres zueinander komplementär ausgeführt sind, um deren gegenseitiges Verrasten zu ermöglichen,
wobei Schritt a/ derart erfolgt, dass das erste Rohr radial komprimiert wird mit zumindest zwei seiner in das zweite Rohr eingeschobenen Nuten, wobei die Umfangsabschnitte zwei aufeinanderfolgende Nuten des ersten Rohrs trennen unter seitlicher Abstützung an den Umfangsabschnitten des zweiten Rohres, welche zwei seiner aufeinanderfolgenden Nuten trennen, wobei Schritt b/ in dem Einspritzkanal derart erfolgt, dass die beiden eingeschobenen Nuten des ersten Rohres und die des zweiten Rohres nacheinander aufgefüllt werden, und zwar ausgehend vom Einspritzkanal durch den Zirkulationskanal hindurch soweit, bis der Klebstoff einen Austrittsbereich der Nuten am Schnittpunkt zwischen den beiden Rohren, der von außerhalb derselben ersichtlich ist, erreicht,
wobei Schritt d/ vom ersten Rohr in das zweite Rohr bis zum Iongitudinalen Anschlagen erfolgt, wobei durch das endgültige Einschieben gleichzeitig das gegenseitige Verrasten der Nuten und das Auffüllen der Freiräume zwischen den Nuten durch Komprimierung des Klebstoffs hervorgerufen werden.

3. Verfahren nach Anspruch 1 oder 2, wobei zumindest ein thermoplastisches Rohr durch Spritzguss geformt wird.

4. Verfahren nach Anspruch 3, wobei der flüssige bzw. pastöse Klebstoff ein Epoxid-Klebstoff ist.

5. Verfahren nach einem der vorangehenden Ansprüche, wobei eines der Rohre aus thermoplastischem Material spritzgegossen ist und das andere Rohr aus Metall besteht.

6. Verfahren nach Anspruch 5, ferner umfassend vor dem Schritt des Einschiebens a/ einen Schritt des Behandelns zumindest von Oberflächen des Endabschnitts des Rohres aus thermoplastischem Material durch Korona-Effekt, so dass eine Oberflächenspannung der genannten Oberflächen von zumindest gleich 45 N.m⁻¹ erhalten wird.

7. Verfahren nach Anspruch 5 oder 6, ferner umfassend vor dem Schritt des Einschiebens a/ einen Schritt des Behandelns zumindest von Oberflächen des Endabschnitts des Rohres aus Metall durch Entfetten, so dass eine Oberflächenspannung der genannten Oberflächen von zumindest gleich 42 N.m⁻¹ erhalten wird.

8. Verbindung (AS1, AS2, AS3) zum Verbinden zwischen zwei Rohren (2.1 oder 2.2, 30 oder 4), von denen zumindest eines ein thermoplastisches Formteil ist,
wobei
- das erste Rohr (2.1 oder 2.2) außen an einem seiner Enden eine Reihe von aufeinanderfolgenden Nuten (200, 201, 202) aufweist, die parallel zueinander verlaufen, über einen Kanal (2010, 2020) paarweise miteinander verbunden sind und sich über eine Einlassschräge (203) fortsetzen,
- das zweite Rohr (4) innen an einem seiner Enden eine Reihe von aufeinanderfolgenden Nuten (400, 401, 402) aufweist, die parallel zueinander verlaufen, sich über eine Einlassschräge (403) fortsetzen und komplementär zu den Nuten (200, 201, 202) des ersten Rohres ausgeführt sind, wobei der Innendurchmesser Øg4 der Umfangsabschnitte beiderseits der Nuten (400, 401, 402) des zweiten Rohres geringer ist als der Außendurchmesser Øg2 der Umfangsabschnitte beiderseits der Nuten (200, 201, 202) des ersten Rohres (2.1 oder 2.2),
wobei
das Ende des ersten Rohres (2.1 oder 2.2) in das Ende des zweiten Rohres (4) unter gegenseitigem Verrasten der Nuten des ersten und des zweiten Rohres (200, 201, 202; 400, 401, 402) und longitudinalen Anschlagen der Einlassschräge (203) des ersten Rohres in die Einlassnut (403) des zweiten Rohres eingeschoben wird, und wobei die Freiräume zwischen verrasteten Bereichen und in den Kanälen mit einem Klebstoff C gefüllt werden.

9. Verbindung (AS1, AS2, AS3) nach Anspruch 8, enthaltend ein Rohr (2.1, 2.2), das aus elektrisch isolierendem Material hergestellt ist, und ein Rohr (30, 4), das aus elektrisch leitfähigem Material hergestellt ist.

10. Sicherungshalter, wie etwa Sicherungshalteschacht für eine Hoch- bzw. Mittelspannungseinrichtung, wie etwa einen Schalter, enthaltend zumindest eine Verbindung nach Anspruch 8 oder 9.

11. Sicherungshalter nach Anspruch 10, der über seine Länge drei Verbindungen aufweist, nämlich
- eine erste Verbindung (AS1) zwischen einem rohrförmigen Zuführblock (3) zum Zuführen von elektrischem Strom und einem Rohr (2.1) mit größerer Länge und aus elektrisch isolierendem Material;
- eine zweite Verbindung (AS2) zwischen dem Rohr (2.1) größerer Länge und einer rohrförmigen Elektrode (4), die in dem Zwischenbereich liegt,
- eine dritte Verbindung (AS3) zwischen der rohrförmigen Elektrode (4) und einem Rohr (2.2) kleinerer Länge aus elektrisch isolierendem Material.

12. Sicherungshalter nach einem der Ansprüche 10 oder 11, der außen unter dem Druck eines dielektrischen Isoliergases, wie etwa SF6, steht, wobei im Bereich einer jeden Verbindung der Halter eine Leckrate für das Isoliergas von unter oder gleich 4.10⁻⁷ cm³.bar/s aufweist, wobei diese Leckrate zugleich vom Außenbereich der Rohre zum Innenbereich hin als auch umgekehrt zutrifft.

13. Stromverteilerstation für Mittel - oder Hochspannung mit Gasisolierung vom Typ SF6, enthaltend zumindest einen Sicherungshalter nach einem der Ansprüche 10 bis 12.

14. Elektrischer Isolator für Hoch- oder Mittelspannungsleitung (HS oder MS), enthaltend eine Verbindung nach Anspruch 9, deren Rohr aus Isoliermaterial ein Abschnitt des Isolatorkörpers ist und deren Rohr aus leitfähigem Material ein Abschnitt einer Armierung ist, wie etwa ein Befestigungsflansch zum Befestigen an einen Träger oder ein Verbindungsanschluss zu einer Leitung (HS oder MS).

15. Elektrische Schalteinrichtung für Hoch- oder Mittelspannung mit einer Verbindung nach Anspruch 9, deren Rohr aus Isoliermaterial ein Abschnitt des Außenmantels der Anschlussdurchführung zu einer Hoch- oder Mittelspannungsleitung ist und das Rohr aus leitfähigem Material ein Abschnitt einer Armierung ist, wie etwa ein Befestigungsflansch zum Befestigen an einen Träger oder ein Verbindungsanschluss zu einer Leitung (HS oder MS).

## Claims

1. A method of joining two tubes (2.1 or 2.2, 30 or 4) together, at least one of which tubes is made of a molded thermoplastic material, in which the ends of the two tubes are joined together by a combination of latching and adhesive bonding, by means of the following steps:
a) partially engaging an end portion of one tube by force into an end portion of the other tube, without the ends being latched together;
b) injecting an adhesive in liquid or semi-liquid form between the end portions of the partially mutually engaged tubes;
c) ceasing to inject the adhesive;
d) fully engaging the tube of smaller diameter until it comes into longitudinal abutment, this full engagement simultaneously causing the ends to be latched together and the gaps between latched zones to be filled by compression of the adhesive; and
e) drying or polymerizing the compressed adhesive.

2. A method according to claim 1, wherein:
prior to step a), the following steps are performed:
- grooves are formed in the outside periphery of one of the end portions of a first tube, and "flow" channels are formed, each of which connects together two consecutive peripheral grooves of the first tube;
- grooves are formed in the inside periphery of one of the end portions of a second tube, and an "injection" channel is formed that opens out both onto the outside of the second tube and into at least one of its grooves; said grooves of the first and second tubes being mutually complementary so that they can be latched together;
step a) is performed such that the first tube is compressed radially with at least two of its grooves engaged into the second tube and the peripheral portions separating two consecutive grooves of the first tube laterally bearing against the peripheral portions of the second tube that separate two consecutive ones of its grooves;
step b) is performed in the injection channel so as to fill successively the two engaged grooves of the first tube and the two engaged grooves of the second tube from the injection channel while going via the flow channel so that the adhesive reaches an outlet zone of the grooves, at the interface between the two tubes and so that said adhesive can be seen from outside said tubes; and
step d) is performed by engaging the first tube into the second tube until it comes into longitudinal abutment therein; the full engagement simultaneously causing the grooves to be latched together, and the gaps between the grooves to be filled by compression of the adhesive.

3. A method according to claim 1 or claim 2, wherein at least one thermoplastic tube is injection molded.

4. A method according to claim 3, wherein the liquid or semi-liquid adhesive is an epoxy adhesive.

5. A method according to any preceding claim, wherein one of the tubes is made of a molded thermoplastic material, and the other of the tubes is made of metal.

6. A method according to claim 5, further including, prior to the engagement step a), a surface treatment step for treating surfaces at least of the end portion of the tube made of thermoplastic material by corona treatment in order to obtain a surface tension for said surfaces of not less than 45 N.m⁻¹.

7. A method according to claim 5 or claim 6, further including, prior to the engagement step a), a surface treatment step for treating surfaces at least of the end portion of the metal tube by degreasing in order to obtain a surface tension for said surfaces of not less than 42 N.m⁻¹.

8. An assembly (AS1, AS2, AS3) joining two tubes (2.1 or 2.2, 30 or 4) together, at least one of which tubes (2.1 or 2.2) is made of a molded thermoplastic material, in which:
- at one of its ends, the first tube (2.1 or 2.2) externally has a series of successive and mutually parallel grooves (200, 201, 202) that are connected together in pairs via channels (2010, 2020) and that are extended by an input bevel (203); and
- at one of its ends, the second tube (4) internally has a series of successive and mutually parallel grooves (400, 401, 402) that are extended by an inlet groove (403) and that are complementary to the grooves (200, 201, 202) of the first tube, the inside diameter Øg4 of the peripheral portions on either side of the grooves (400, 401, 402) of the second tube being less than the outside diameter Øg2 of the peripheral portions on either side of the grooves (200, 201, 202) of the first tube (2.1 or 2.2);
the end of the first tube (2.1 or 2.2) is engaged into the end of the second tube (4) with the grooves of the first and second tubes (200, 201, 202; 400, 401, 402) latching together, and the inlet bevel (203) of the first tube coming into longitudinal abutment in the inlet groove (403) of the second tube, and in which assembly the gaps between latched zones and inside the channels are filled with an adhesive C.

9. An assembly (AS1, AS2, AS3) according to claim 8, that assembles together a tube (2.1, 2.2) made of an electrically insulating material and a tube (30, 4) made of an electrically conductive material.

10. A fuse holder device, such as a fuse well, for high-voltage or medium-voltage switchgear, such as a switch, the device including at least one assembly according to claim 8 or claim 9.

11. A fuse holder device according to claim 10, including three assemblies along its length, namely:
- a first assembly (AS1) between a tubular electric current feed block (3) and a tube (2.1) of longer length made of an electrically insulating material;
- a second assembly (AS2) between the tube (2.1) of longer length and a tubular electrode (4) situated in the intermediate portion; and
- a third assembly (AS3) between the tubular electrode (4) and a tube (2.2) of shorter length made of an electrically insulating material.

12. A fuse holder device according to any one of claims 10 or 11, externally under pressure from a dielectric insulating gas, such as SF₆, in which device, at each assembly, the device has an insulating gas leakage rate of not more than 4 × 10⁻⁷ cm³.bar/s, the leakage rate being the rate of leakage both from the outside of the tubes to the inside thereof and vice versa.

13. A medium-voltage or high-voltage electricity distribution substation that is insulated by a gas of the SF₆ type, and that includes at least one fuse holder device according to any one of claims 10 to 12.

14. An electrical insulator for a high-voltage or medium-voltage line, which insulator includes an assembly according to claim 9, in which assembly the tube made of an insulating material is a portion of the insulator body, and the tube made of a conductive material is a portion of a structure, such as a flange for fastening to a support or a terminal for connection to a high-voltage or medium-voltage line.

15. High-voltage or medium-voltage electrical switchgear including an assembly according to claim 9, in which assembly the tube made of an insulating material is a portion of the outer casing of the bushing for connecting to a high-voltage or medium-voltage line, and the tube made of a conductive material is a portion of a structure, such as a flange for fastening to a support, or a terminal for connection to a high-voltage or medium-voltage line.
